# EUROPÄISCHE PATENTSCHRIFT

(11) **EP 3 303 988 B1**
(45) Veröffentlichungstag und Bekanntmachung des Hinweises auf die Patenterteilung: **23.01.2019**
(21) Anmeldenummer: 16728599.8
(22) Anmeldetag: 25.05.2016
(51) Int. Cl.: G01B 11/26, B21D 5/00

(54) **ELEKTRONISCHE WINKELMESSVORRICHTUNG FÜR EINE BIEGEMASCHINE ZUM MESSEN DES BIEGEWINKELS ZWISCHEN DEN SCHENKELN EINES BLECHS**
ELECTRONIC ANGLE MEASURING DEVICE FOR A BENDING MACHINE FOR MEASURING THE BENDING ANGLE BETWEEN THE LIMBS OF A SHEET
DISPOSITIF GONIOMÉTRIQUE ÉLECTRONIQUE POUR CINTREUSE, PERMETTANT DE MESURER L'ANGLE DE CINTRAGE ENTRE LES CÔTÉS D'UNE TÔLE

(30) Priorität: 28.05.2015 AT 3342015
(43) Veröffentlichungstag der Anmeldung: 11.04.2018
(73) Patentinhaber: KEBA AG, 4041 Linz (AT)
(72) Erfinder: WÖGERBAUER, Johann, 4040 Linz (AT); WÖGERBAUER, Andreas, 4040 Linz (AT)
(74) Vertreter: Patentanwaltskanzlei Hübscher
(86) Internationale Anmeldenummer: PCT/AT2016/050164
(87) Internationale Veröffentlichungsnummer: WO 2016/187639

(56) Entgegenhaltungen:
- WO-A1-2004/090467
- JP-A- 2002 059 217
- US-A1- 2007 058 155
- US-A1- 2015 085 301

## Beschreibung

### Technisches Gebiet

Die Erfindung bezieht sich auf eine elektronische Winkelmessvorrichtung zum Messen des Biegewinkels zwischen den Schenkeln eines Blechs mit einem Sensorelement, das berührungslos winkeläquivalente Signale an eine einen Mikroprozessor und eine Speichereinheit aufweisende, mit einer digitalen Anzeige verbundene Signalverarbeitungseinrichtung liefert.

### Stand der Technik

Die Messung des Biegewinkels bei der Blechbiegung ist von wesentlicher Bedeutung, da das Werkstück nach dem Biegeprozess in Abhängigkeit vom Werkstoff, von der Dicke des Blechs, von der Walzrichtung und dgl. nachfedert. Mit dem Einsatz einer effektiven Messvorrichtung kann daher das Biegeergebnis noch in der Maschine kontrolliert bzw. durch einen manuellen oder automatischen Nachbiegevorgang richtiggestellt bzw. verbessert werden, ohne dass das Blech aus der Maschine entnommen werden muss. Die Integration der bekannten Messvorrichtungen in eine Biegemaschine erfordert allerdings eine aufwendige Anpassung der Biegemaschinen durch Sonderkonstruktionen.

Zur berührungslosen Messung des Biegewinkels zwischen den Schenkeln eines in einer Biegemaschine zu biegenden Blechs sind Messvorrichtungen bekannt (DE 43 12 565 C2), die auf einem Lichtschnittverfahren beruhen. Darüber hinaus ist es aber auch bekannt (JP 2002-59217 A), Messvorrichtungen einzusetzen, bei denen der Umstand ausgenützt wird, dass die Strahlungsintensität eines an einem Schenkel des Blechs reflektierten, in Abstrahlrichtung empfangenen Laserstrahls am größten ist, wenn der Laserstrahl senkrecht auf den Blechschenkel auftrifft. Zu diesem Zweck ist im Bereich des Oberwerkzeugs der Biegemaschine ein Spiegel vorgesehen, der um eine zur Scheitelachse des Biegewinkels parallele Achse rotiert und zu dieser Rotationsachse unter 45° geneigt ist, sodass ein in Richtung der Rotationsachse auf den Spiegel auftreffender Laserstrahl in einer zur Rotationsachse senkrechten Ebene auf die Schenkel des zu biegenden Blechs abgelenkt und von den Schenkeln reflektiert wird, und zwar in Abstrahlrichtung, wenn der Laserstrahl senkrecht auf den jeweiligen Schenkel steht. Über die zugehörige Drehstellung des Antriebmotors für den Spiegel kann dann der jeweilige Winkel zwischen den beiden Schenkeln in einer Signalverarbeitungseinrichtung ermittelt werden. Der Nachteil, für den Einsatz einer solchen Messvorrichtung die Biegemaschine konstruktiv anpassen zu müssen, bleibt allerdings bestehen.

### Darstellung der Erfindung

Der Erfindung liegt somit die Aufgabe zugrunde, einfache konstruktive Voraussetzungen zu schaffen, um eine Biegemaschinen mit einer elektronischen Winkelmessvorrichtung zum Messen des Biegewinkels zwischen den Schenkeln eines Blechs auch nachträglich ausrüsten zu können, ohne aufwendige Umrüstungen an der Biegemaschine vornehmen zu müssen.

Die Erfindung löst die gestellte Aufgabe durch die Merkmale des Anspruchs 1.

Da die Messvorrichtung als Winkelmessgerät ausgebildet ist, das die für die Winkelmessung erforderlichen Einrichtungen umfasst, nämlich ein Sensorelement, das berührungslos winkeläquivalente Signale an eine einen Mikroprozessor und eine Speichereinheit aufweisende, mit einer digitalen Anzeige verbundene, ebenfalls im Winkelmessgerät angeordnete Signalverarbeitungseinrichtung liefert, braucht dieses Winkelmessgerät lediglich am Oberwerkzeug der Biegemaschine befestigt zu werden, was keine aufwendige konstruktive Umrüstung der Biegemaschine erfordert. Voraussetzung ist allerdings, dass das Sensorelement für das Aussenden und Empfangen von Messsignalen geeignet ist, um die für ein Handmessgerät erforderliche gedrängte Bauweise sicherstellen zu können. Dies gelingt in an sich bekannter Weise dadurch, dass das Sensorelement die Schenkel des Blechs mit einem Laserstrahl in einer zur Scheitelachse des Biegewinkels senkrechten Ebene abtastet und lediglich den in Abstrahlrichtung an den Schenkeln reflektierten Laserstrahl erfasst, dessen Intensität am größten ist, wenn der abgestrahlte Laserstrahl senkrecht auf die Schenkel des Blechs trifft. Aus den Drehstellungen des rotierenden Spiegels zum Abstrahlen des Laserstrahls für die zu den Schenkeln senkrechten Laserstrahlen kann dann mittels der integrierten Signalverarbeitungseinrichtung der jeweilige Biegewinkel abgeleitet und angezeigt werden. Voraussetzung ist allerdings, dass ein Messdurchgriff vom Sensorelement zu den beiden Schenkeln des Blechs möglich ist. Da die Oberwerkzeuge der Biegemaschinen üblicherweise aus einzelnen Stempelsegmenten zusammengesetzt sind, ist es für einen Messdurchgriff auf die beiden Schenkel des zu biegenden Blechs lediglich erforderlich, zwischen zwei Stempelsegmenten einen Messspalt freizulassen und das Winkelmessgerät gegenüber diesem Messspalt auszurichten. Da es lediglich auf die Ausrichtung der Rotationsachse parallel zur Scheitelachse des zu messenden Winkels, nicht aber auf die Lage der Rotationsachse ankommt, bedarf es keiner besonderen Umrüstung der herkömmlichen Oberwerkzeuge, um ein erfindungsgemäßes Winkelmessgerät an dem Oberwerkzeug befestigen zu können.

Um an der Biegemaschine keine zusätzlichen Maßnahmen zur Befestigung des Winkelmessgeräts vornehmen zu müssen, kann das Gerätegehäuse in seiner Rückwand wenigstens einen Permanentmagneten zur Befestigung am Oberwerkzeug aufweisen, was nicht nur vorteilhafte Montagebedingungen schafft, sondern auch die Möglichkeit einer einfachen Nachjustierung des Winkelmessgeräts bezüglich der Scheitelachse des Biegewinkels und des Messspalts mit sich bringt.

Weist das Winkelmessgerät einen an die Signalverarbeitungseinrichtung angeschlossenen, die Senkbewegung und/oder die Hebebewegung des Oberwerkzeugs erfassenden Bewegungssensor zum Auslösen des Messvorgangs auf, so kann es unabhängig von der Maschinensteuerung betrieben werden. Durch den Bewegungssensor wird ja die Bewegung des Oberwerkzeugs durch das Winkelmessgerät selbst erfasst, sodass Winkelmessungen automatisch synchron zu den Arbeitszyklen der Biegemaschine durchgeführt können, ohne dass an der Biegemaschine hierfür besondere Vorkehrungen, beispielsweise das Vorsehen von Verkabelungen oder von Schnittstellen zur Maschinensteuerung für den Austausch von Synchronisationssignalen, getroffen werden müssten. Besonders vorteilhafte Konstruktionsverhältnisse ergeben sich dabei, wenn der Bewegungssensor als mehrachsiger Beschleunigungsgeber ausgebildet ist, weil in diesem Fall mithilfe des mehrachsigen Beschleunigungsgebers eine einfache Ausrichtung des Winkelmessgeräts gegenüber der Scheitelachse des Biegewinkels möglich wird, die ja üblicherweise horizontal verläuft. Die Erfassung der Schwerkraftrichtung aufgrund der durch die Signalverarbeitungseinrichtung entsprechend ausgewerteten Beschleunigungssignale kann außerdem zur Neigungserfassung und -anzeige genützt werden.

Die Erfassung der Erdbeschleunigung durch den mehrachsigen Beschleunigungsgeber ermöglicht darüber hinaus eine Korrektur des Signals des Beschleunigungsgebers um den auf der Erdbeschleunigung beruhenden Signalanteil, sodass ausschließlich Bewegungsänderungen des Winkelmessgeräts und damit des Oberwerkzeugs erfasst werden. Aus den korrigierten, offsetfreien Beschleunigungswerten lassen sich somit die Geschwindigkeit und der Weg des Oberwerkzeugs für den Start und das Beenden des Messvorgangs ermitteln.

Signalisiert die Signalverarbeitungseinrichtung die Über- oder Unterschreitung von programmierbaren Toleranzgrenzen der zu messenden Winkel, so kann in vorteilhafter Weise in den Biegevorgang eingegriffen werden, um die Einhaltung von Toleranzgrenzen sicherzustellen.

Zur Verbesserung der Messwertgenauigkeit, können insbesondere während der Hebebewegung des Oberwerkzeugs Messwerte in der Speichereinheit abgelegt werden, sodass diese Messwerte zur Erhöhung der Messwertgenauigkeit durch die Signalverarbeitungseinrichtung nach mathematischen Methoden ausgewertet werden können. Dadurch können insbesondere Nachschwingungsvorgänge erfasst und die den Nachschwingungen zugehörigen Messwerte eliminiert werden.

Weist die Signalverarbeitungseinrichtung eine Funk-Schnittstelle auf, so entfallen jegliche Verkabelungen, um Daten des Winkelmessgeräts auslesen und beispielsweise der Maschinensteuerung vorgeben zu können oder von außen steuernd auf das Winkelmessgerät zugreifen zu können. In diesem Zusammenhang braucht wohl nicht besonders hervorgehoben zu werden, dass sich für die Energieversorgung Batterien bzw. Akkumulatoren anbieten, um Kabelanschlüsse zu vermeiden.

### Kurze Beschreibung der Zeichnung

In der Zeichnung ist der Erfindungsgegenstand beispielsweise dargestellt. Es zeigen
- Fig. 1: eine Biegemaschine mit einem erfindungsgemäßen digitalen Winkelmessgerät in einer zum Teil aufgerissenen, schematischen Seitenansicht
- Fig. 2: diese Biegemaschine in einem schematischen Vertikalschnitt und
- Fig. 3: das erfindungsgemäße elektronische Winkelmessgerät in einem vereinfachten Blockschaltbild.

### Weg zur Ausführung der Erfindung

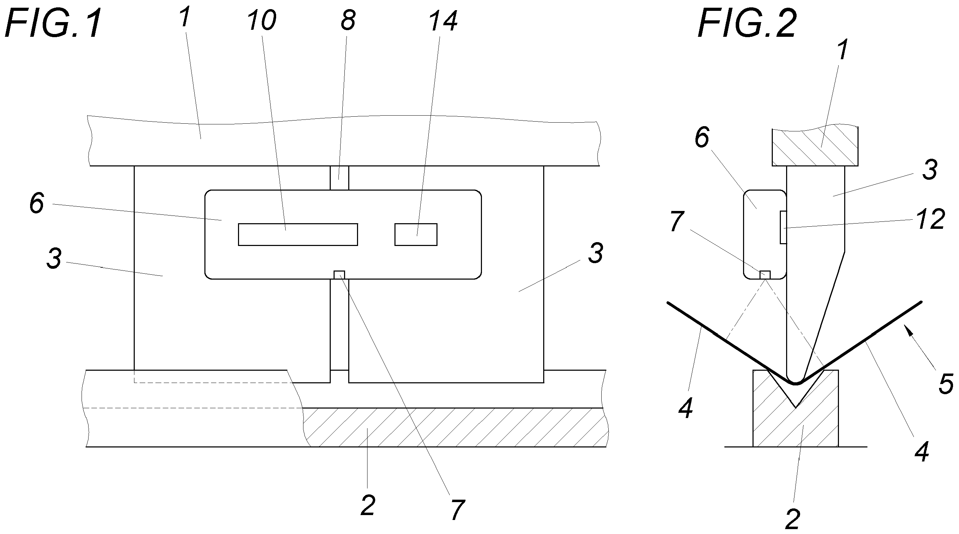

Die dargestellte Biegemaschine weist ein senk- und hebbares Oberwerkzeug 1 auf, das mit einem Unterwerkzeug 2 in Form einer Matrize zusammenwirkt und sich aus nebeneinandergereihten Stempelsegmenten 3 zusammensetzt. Zur Messung des Biegewinkels zwischen den Schenkeln 4 eines zu biegenden Blechs 5 ist am Oberwerkzeug 1 ein digitales Winkelmessgerät 6 befestigt, das ein Sensorelement 7 mit einem Spiegel umfasst, der um eine zur Scheitelachse des Biegewinkels zwischen den beiden Schenkeln 4 des Blechs parallele Rotationsachse gedreht wird und einen Laserstrahl in einer zur Scheitelachse senkrechten Ebene auf die beiden Schenkel 4 ablenkt. Der Laserstrahl tritt dabei durch einen Messspalt 8 zwischen zwei Stempelsegmenten 3 hindurch. Da das Sensorelement 7 einen Empfänger für den in Abstrahlrichtung an den Schenkeln 4 reflektierten Laserstrahl besitzt und die Intensität des reflektierten Laserstrahls am größten ist, wenn der Laserstrahl senkrecht zu den Schenkeln 4 steht, kann die Drehlage des Spiegels für die Laserstrahlen angegeben werden, die senkrecht auf die Schenkel 4 des Blechs 5 stehen, wie dies in der Fig. 2 angedeutet ist. Es lassen sich somit aus diesen Drehstellungen des Spiegels die jeweiligen Biegewinkel zwischen den beiden Schenkeln 4 ableiten.

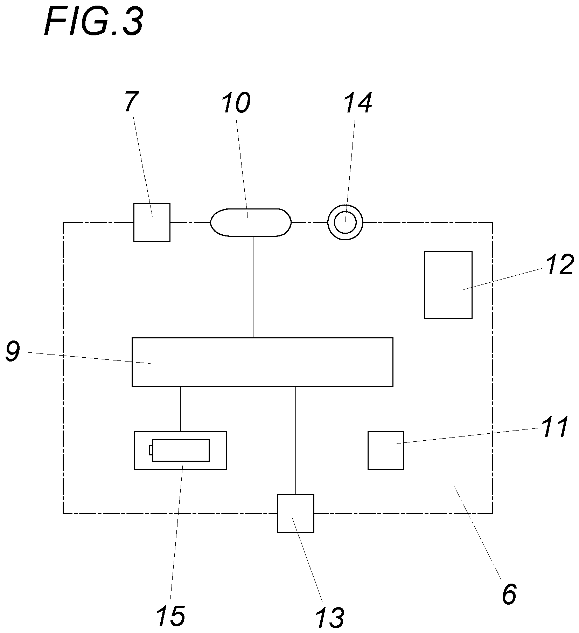

Zu diesem Zweck ist gemäß der Fig. 3 das Sensorelement 7 an eine Signalverarbeitungseinrichtung 9 angeschlossen, die die vom Sensorelement 7 empfangenen Messsignale auswertet und die gemessenen Biegewinkel an eine Anzeige 10 ausgibt. Diese Anzeige 10 ist nicht nur für den Einsatz des Winkelmessgeräts als Handgerät erforderlich, sondern erlaubt es auch beim Einsatz als Maschinenmessgerät, die Biegewinkel und andere angezeigte Daten abzulesen, ohne den Blick maßgeblich vom ohnedies im Blickfeld befindlichen Blech 5 abzuwenden.

Da das Winkelmessgerät 6 über einen an die Signalverarbeitungseinrichtung 9 angeschlossenen Bewegungssensor 11 verfügt, kann über die Erfassung der Bewegung des Oberwerkzeugs 1 die Winkelmessung mit der Bewegung des Oberwerkzeugs 1 synchronisiert werden, ohne auf die Maschinensteuerung zurückgreifen zu müssen. Es ist aber auch möglich die Steuerung des Winkelmessgeräts 6 von außen synchron zum Biegevorgang durchzuführen, beispielsweise durch einen Anschluss des Winkelmessgeräts 6 an die Maschinensteuerung.

Das elektronische Winkelmessgerät 6 kann ohne aufwendige Umrüstarbeiten bei bestehenden Biegemaschinen eingesetzt werden, wenn ein Messdurchgriff des Sensorelements 7 auf die beiden Schenkel 4 des Blechs 5 möglich ist, was bei der üblichen Zusammensetzung des Oberwerkzeugs 1 aus Stempelsegmenten 3 in einfacher Art sichergestellt werden kann. Das Winkelmessgerät 6 ist ja lediglich auf dem Oberwerkzeug 1 entsprechend zu befestigen. Zu diesem Zweck empfiehlt es sich, im Bereich der Gehäuserückwand des Winkelmessgeräts 6 wenigstens einen Permanentmagneten 12 vorzusehen.

Ist der Bewegungssensor 11 als mehrachsiger Beschleunigungsgeber ausgebildet, so kann mittels dessen Signals für die Erdbeschleunigung das Winkelmessgerät 6 in einfacher Art gegenüber der durch die Matrize und die Stempelsegmente 3 vorgegebenen, horizontalen Scheitelachse des Biegewinkels zwischen den beiden Schenkeln 4 ausgerichtet werden. Außerdem wird es möglich, ein hinsichtlich der Erdbeschleunigung korrigiertes Messsignal auszuwerten, sodass ausschließlich Beschleunigungen des Winkelmessgeräts 6 zur Ermittlung der Bewegung des Oberwerkzeugs 1 genützt werden können.

Weist das Winkelmessgerät 6 eine Funk-Schnittstelle 13 auf, so können Daten nicht nur aus dem Winkelmessgerät 6 kabellos nach außen, sondern auch Signale von außen an das Winkelmessgerät 6 übertragen werden. Um unterschiedliche Betriebsarten für das Winkelmessgerät 6 einstellen zu können, kann das Winkelmessgerät außerdem mit einer Eingabel 4 versehen sein. Um von Kabelanschlüssen befreit zu sein, ist das Winkelmessgerät 6 bevorzugt mit Batterien oder Akkumulatoren 15 zur Energieversorgung auszustatten.

## Patentansprüche

1. Elektronische Winkelmessvorrichtung zum Messen des Biegewinkels zwischen den Schenkeln (4) eines Blechs (5) mit einem einen rotierenden Spiegel umfassenden Sensorelement (7), das berührungslos winkeläquivalente Signale an eine einen Mikroprozessor und eine Speichereinheit aufweisende, mit einer digitalen Anzeige (10) verbundene Signalverarbeitungseinrichtung (9) liefert, **dadurch gekennzeichnet, dass** das einen Laserstrahl durch den rotierenden Spiegel auf die beiden Schenkel (4) des Blechs (5) ablenkende und aus dem in Abstrahlrichtung empfangenen Reflexionsstrahl einen Messwert bildende Sensorelement (7), die Signalverarbeitungseinrichtung (9) mit dem Mikroprozessor und der Speichereinheit sowie die digitale Anzeige (10) ein an einem Oberwerkzeug (1) einer Biegemaschine befestigbares und als Handmessgerät einsetzbares Winkelmessgerät (6) bilden.

2. Elektronische Winkelmessvorrichtung nach Anspruch 1, **dadurch gekennzeichnet, dass** das Winkelmessgerät (6) in der Gehäuserückwand einen Permanentmagneten (12) zur Befestigung am Oberwerkzeug (1) der Biegemaschine aufweist.

3. Elektronische Winkelmessvorrichtung nach Anspruch 1 oder 2, **dadurch gekennzeichnet, dass** das Winkelmessgerät (6) einen an die Signalverarbeitungseinrichtung (9) angeschlossenen, die Senkbewegung und/oder die Hebebewegung des Oberwerkzeugs (1) erfassenden Bewegungssensor (11) zum Auslösen des Messvorgangs aufweist.

4. Elektronische Winkelmessvorrichtung nach Anspruch 3, **dadurch gekennzeichnet, dass** der Bewegungssensor (11) als mehrachsiger Beschleunigungsgeber ausgebildet ist.

5. Elektronische Winkelmessvorrichtung nach einem der Ansprüche 1 bis 4, **dadurch gekennzeichnet, dass** die Signalverarbeitungseinrichtung (9) die Über- oder Unterschreitung von programmierbaren Toleranzgrenzen der zu messenden Winkel signalisiert.

6. Elektronische Winkelmessvorrichtung nach einem der Ansprüche 1 bis 5, **dadurch gekennzeichnet, dass** die Signalverarbeitungseinrichtung (9) während der Senk- und Hebebewegung des Oberwerkzeugs (1) in der Speichereinheit abgelegte Messwerte zur Erhöhung der Messwertgenauigkeit nach mathematischen Methoden auswertet.

7. Elektronische Winkelmessvorrichtung nach einem der Ansprüche 1 bis 6, **dadurch gekennzeichnet, dass** die Signalverarbeitungseinrichtung (9) eine Funk-Schnittstelle (13) aufweist.

## Claims

1. Electronic angle measuring device for measuring the bending angle between the limbs (4) of a metal sheet (5) having a sensor element (7) which comprises a rotating mirror and which contactlessly delivers angle-equivalent signals to a signal processing unit (9) comprising a microprocessor and a memory unit and connected to a digital display (10), **characterised in that** the sensor element (7), which deflects a laser beam by means of the rotating mirror onto the two limbs (4) of the metal sheet (5) and forms a measured value from the reflection beam received in the beam direction, the signal processing unit (9) with the microprocessor, and the memory unit as well as the digital display (10) form an angle measuring apparatus (6) which can be attached to an upper tool (1) of a bending machine and can be used as a hand-held measuring apparatus.

2. Electronic angle measuring device as claimed in claim 1, **characterised in that** the angle measuring apparatus (6), in the housing rear wall, has a permanent magnet (12) for fastening to the upper tool (1) of the bending machine.

3. Electronic angle measuring device as claimed in claim 1 or 2, **characterised in that** the angle measuring apparatus (6) comprises a movement sensor (11), which is attached to the signal processing unit (9) and detects the lowering movement and/or raising movement of the upper tool (1), in order to trigger the measuring procedure.

4. Electronic angle measuring device as claimed in claim 3, **characterised in that** the movement sensor (11) is designed as a multi-axis acceleration sensor.

5. Electronic angle measuring device as claimed in any one of claims 1 to 4, **characterised in that** the signal processing unit (9) signals the overshooting or undershooting of programmable tolerance limits of the angles to be measured.

6. Electronic angle measuring device as claimed in any one of claims 1 to 5, **characterised in that** the signal processing unit (9) evaluates measured values, which are stored in the memory unit during the lowering and raising movement of the upper tool (1), according to mathematical methods in order to increase the accuracy of the measured values.

7. Electronic angle measuring device as claimed in any one of claims 1 to 6, **characterised in that** the signal processing unit (9) has a radio interface (13).

## Revendications

1. Dispositif goniométrique électronique, permettant de mesurer l'angle de cintrage entre les côtés (4) d'une tôle (5), comprenant un élément de détection (7) doté d'un miroir rotatif qui fournit des signaux de représentation d'angle sans contact à un dispositif de traitement de signal (9) qui présente un microprocesseur et une unité mémoire et qui est relié à un affichage numérique (10), **caractérisé en ce que** l'élément de détection (7) formant une valeur de mesure à partir du rayon de réflexion reçu dans la direction de rayonnement, et déviant un rayon laser par le biais du miroir rotatif sur les deux cotés (4) de la tôle (5), le dispositif de traitement de signal (9) avec le microprocesseur et l'unité mémoire ainsi que l'affichage (10) numérique formant un appareil goniométrique (6) qui peut être fixé sur un outil supérieur (1) d'une cintreuse et peut être utilisé comme appareil de mesure manuel.

2. Dispositif goniométrique électronique selon la revendication 1, **caractérisé en ce que** l'appareil goniométrique (6) comporte dans la paroi arrière un aimant permanent (12) pour fixation au niveau de l'outil supérieur (1) de la cintreuse.

3. Dispositif goniométrique électronique selon la revendication 1 ou 2, **caractérisé en ce que** l'appareil goniométrique (6) comporte un capteur de mouvement (11) raccordé au dispositif de traitement de signal (9) et détectant le mouvement d'abaissement et/ou d'élévation de l'outil supérieur (1), pour déclencher le processus de mesure.

4. Dispositif goniométrique électronique selon la revendication 3, **caractérisé en ce que** le capteur de mouvement (11) est réalisé en tant qu'accéléromètre multiaxe

5. Dispositif goniométrique électronique selon l'une des revendications 1 à 4, **caractérisé en ce que** le dispositif de traitement de signal (9) signalise le franchissement à la hausse ou à la baisse des limites de tolérance pouvant être programmées de l'angle à mesurer.

6. Dispositif goniométrique électronique selon l'une des revendications 1 à 5, **caractérisé en ce que** le dispositif de traitement de signal (9) évalue, pendant le mouvement d'abaissement et d'élévation de l'outil supérieur (1), les valeurs de mesure enregistrées dans l'unité mémoire pour augmenter la précision de la valeur de mesure suivant des méthodes mathématiques.

7. Dispositif goniométrique électronique selon l'une des revendications 1 à 6, **caractérisé en ce que** le dispositif de traitement de signal (9) comporte une interface radio (13).
